# EUROPEAN PATENT APPLICATION

(11) **EP 4 166 003 A1**
(43) Date of publication of application: **19.04.2023**
(21) Application number: 21822337.8
(22) Date of filing: 26.04.2021
(51) Int. Cl.: A23K 10/20, A23K 50/80, A01K 61/10

(54) **FEED FOR AQUATIC ANIMALS**

(30) Priority: 10.06.2020 JP 2020101085
(71) Applicant: Sumitomo Chemical Company, Limited, Tokyo 103-6020 (JP); Flying Spark Ltd, Rehovot 7608804 (IL)
(72) Inventor: YAMAMORI, Akihiro, Osaka-shi, Osaka 554-8558 (JP); KLES, Keren, 7401253 Ness Ziona-city (IL); GRONICH, Eran, 7608804 Rehovot (IL)
(74) Representative: J A Kemp LLP
(86) International application number: PCT/JP2021/016667
(87) International publication number: WO 2021/251016

(57) **Abstract**

An object is to provide a feed for aquatic animals that comprises a fish-meal-alternative material. A feed for aquatic animals, comprising (A) an insect material having a calcium content of 800 to 3500 mg/100 g and/or a magnesium content of 230 to 1000 mg/100 g, and (B) fish meal and/or a fish-meal-alternative material.

## Description

### Technical Field

The present invention relates to a feed for aquatic animals and the like.

### Background Art

In recent years, the price of fish meal, which is a main component of feeds for aquatic animals, has risen. The causes thereof are, for example, a decrease in the catch of South American horse mackerel and sardines, which are raw materials for fish meal; and an increase in high-cost farmed fish due to global population growth. There is thus a demand for fish meal alternatives. Examples of fish meal alternatives include microalgae, single-cell proteins, soybean meal, soy protein concentrate, malt protein, corn gluten meal, distiller's dried grains with solubles, rapeseed oil meal, meat meal, feather meal, blood meal, and sake lees. However, these fish meal alternatives are less palatable to fish, resulting in low growth efficiency.

In Patent Literature 1, the use of, as a fish-meal-alternative material, a material obtained by a method comprising mixing brown algae with rice bran, followed by culture with koji mold, has been proposed. However, this material, which is obtained through koji mold culture using multiple raw materials, is expensive.

### Citation List

### Patent Literature

PTL 1: JP2019-187405A

### Summary of Invention

### Technical Problem

An object of the present disclosure is to provide a feed for aquatic animals that comprises a fish-meal-alternative material.

### Solution to Problem

The present inventor conducted extensive research, and found that the above object can be achieved by a feed for aquatic animals, comprising (A) an insect material having a calcium content of 800 to 3500 mg/100 g, and/or a magnesium content of 230 to 900 mg/100 g, and (B) fish meal and/or a fish-meal-alternative material. The present inventor conducted further research based on this finding, and accomplished the present invention. Specifically, the present disclosure includes the following embodiments.

Item 1. A feed for aquatic animals, comprising:
(A) an insect material having a calcium content of 800 to 3500 mg/100 g, and/or a magnesium content of 230 to 1000 mg/100 g; and
(B) fish meal and/or a fish-meal-alternative material.

Item 2. The feed for aquatic animals according to Item 1, wherein the insect material has a protein content of 40 to 80 mass%.

Item 3. The feed for aquatic animals according to Item 1 or 2, wherein the insect material has a cholesterol content of 0.25 mg/100 g or less.

Item 4. The feed for aquatic animals according to any one of Items 1 to 3, wherein the insect material comprises at least one member selected from the group consisting of iron, phosphorus, potassium, sodium, and zinc.

Item 5. The feed for aquatic animals according to Item 4, wherein the insect material satisfies at least one requirement selected from the group consisting of an iron content of 15 to 35 mg/100 g, a phosphorus content of 1000 to 2800 mg/100 g, a potassium content of 500 to 1300 mg/100 g, a sodium content of 1 to 200 mg/100 g, and a zinc content of 10 to 50 mg/100 g.

Item 6. The feed for aquatic animals according to any one of Items 1 to 5, wherein the insect material comprises at least one fatty acid selected from the group consisting of monounsaturated fatty acids and polyunsaturated fatty acids.

Item 7. The feed for aquatic animals according to Item 6, wherein the insect material satisfies at least one requirement selected from the group consisting of a monounsaturated fatty acid content in the fatty acid of 25 to 60 mass%, and a polyunsaturated fatty acid content in the fatty acid of 0.1 to 10 mass%.

Item 8. The feed for aquatic animals according to any one of Items 1 to 7, wherein the insect material is at least one member selected from the group consisting of insect extracts and insect homogenates.

Item 9. The feed for aquatic animals according to any one of Items 1 to 8, wherein the insect material is a material derived from at least one member selected from the group consisting of eggs, larvae, prepupae, pupae, and adult insects.

Item 10. The feed for aquatic animals according to any one of Items 1 to 9, wherein the insect material is a material derived from an insect belonging to Diptera.

Item 11. The feed for aquatic animals according to any one of Items 1 to 10, wherein the insect material is a material derived from at least one member selected from the group consisting of insects belonging to Tephritidae, insects belonging to Stratiomyidae, and insects belonging to Muscidae.

Item 12. The feed for aquatic animals according to any one of Items 1 to 11, wherein the content of the insect material in the feed for aquatic animals is 0.5 to 50 mass%.

Item 13. The feed for aquatic animals according to any one of Items 1 to 12, which is for fish.

Item 14A. A method for producing an aquatic animal, comprising feeding the aquatic animal the feed for aquatic animals according to any one of Items 1 to 13.

Item 14B. Use of a feed comprising (A) an insect material having a calcium content of 800 to 3500 mg/100 g, and/or a magnesium content of 230 to 1000 mg/100 g, and (B) fish meal and/or a fish-meal-alternative material, for feeding an aquatic animal.

Item 14C. Use of (A) an insect material having a calcium content of 800 to 3500 mg/100 g, and/or a magnesium content of 230 to 1000 mg/100 g, and (B) fish meal and/or a fish-meal-alternative material, for producing a feed for aquatic animals comprising (A) and (B).

Item 15. An aquatic animal growth promoter comprising an insect material having a calcium content of 800 to 3500 mg/100 g, and/or a magnesium content of 230 to 1000 mg/100 g.

Item 15A1. A method for promoting the growth of an aquatic animal, comprising feeding the aquatic animal an insect material having a calcium content of 800 to 3500 mg/100 g, and/or a magnesium content of 230 to 1000 mg/100 g.

Item 15A2. A method for producing an aquatic animal growth promoter, comprising adding an insect material having a calcium content of 800 to 3500 mg/100 g, and/or a magnesium content of 230 to 1000 mg/100 g, to a feed for aquatic animals.

Item 15B. Use of an insect material having a calcium content of 800 to 3500 mg/100 g, and/or a magnesium content of 230 to 1000 mg/100 g, for promoting the growth of an aquatic animal.

Item 15C. Use of an insect material having a calcium content of 800 to 3500 mg/100 g, and/or a magnesium content of 230 to 1000 mg/100 g, for producing an aquatic animal growth promoter.

Item 16. An agent for reducing the visceral weight ratio of an aquatic animal, comprising an insect material having a calcium content of 800 to 3500 mg/100 g, and/or a magnesium content of 230 to 1000 mg/100 g.

Item 16A1. A method for reducing the visceral weight ratio of an aquatic animal, comprising feeding the aquatic animal an insect material having a calcium content of 800 to 3500 mg/100 g, and/or a magnesium content of 230 to 1000 mg/100 g.

Item 16A2. A method for producing an agent for reducing the visceral weight ratio of an aquatic animal, comprising adding an insect material having a calcium content of 800 to 3500 mg/100 g, and/or a magnesium content of 230 to 1000 mg/100 g, to a feed for aquatic animals.

Item 16B. Use of an insect material having a calcium content of 800 to 3500 mg/100 g, and/or a magnesium content of 230 to 1000 mg/100 g, for reducing the visceral weight ratio of an aquatic animal.

Item 16C. Use of an insect material having a calcium content of 800 to 3500 mg/100 g, and/or a magnesium content of 230 to 1000 mg/100 g, for producing an agent for reducing the visceral weight ratio of an aquatic animal.

### Advantageous Effects of Invention

According to the present disclosure, a feed for aquatic animals that comprises a fish-meal-alternative material, a method for producing an aquatic animal, and the like can be provided. Moreover, according to the present disclosure, an aquatic animal growth promoter and the like can also be provided.

### Description of Embodiments

### 1. Definition

In the present specification, the terms "comprise" and "contain" include the concepts of "comprise," "contain," "consist essentially of," and "consist of."

In the present specification, the phrase "and/or" includes both the concepts of "and" and "or." Specifically, "A and/or B" includes the concepts of A alone, B alone, and the combination of A and B.

In the present specification, the content of each component in the insect material is a value on a dry weight basis.

### 2. Feed for Aquatic Animals

The present disclosure provides as one embodiment a feed for aquatic animals, comprising:
(A) an insect material having a calcium content of 800 to 3500 mg/100 g and/or a magnesium content of 230 to 900 mg/100 g; and
(B) a fish meal and/or a fish-meal-alternative material; (also referred to herein as "the feed of the present disclosure"). This is explained below.

The insect material is not particularly limited, as long as it is an insect-derived material, i.e., a material prepared from an insect and containing substances, components, etc., that constitute the body of an insect.

The kind of insect is not particularly limited, as long as it is an insect species from which an insect material that has the above-prescribed calcium content and/or magnesium content can be prepared. Examples of insects include insects belonging to Diptera. Examples of insects belonging to Diptera include insects belonging to Brachycera, insects belonging to Nematocera, and the like; and are preferably insects belonging to Brachycera. Examples of insects belonging to Brachycera include insects belonging to Muscomorpha, insects belonging to Stratiomyomorpha, insects belonging to Tabanomorpha, insects belonging to Asilomorpha, insects belonging to Empidomorpha, and the like; and are preferably insects belonging to Muscomorpha, insects belonging to Stratiomyomorpha, and the like. Specific examples of insects belonging to Brachycera include insects belonging to Tephritidae, insects belonging to Muscidae, insects belonging to Stratiomyidae, insects belonging to Sarcophagidae, and the like; and are preferably insects belonging to Tephritidae, insects belonging to Muscidae, insects belonging to Stratiomyidae, and the like, more preferably insects belonging to Tephritidae, even more preferably insects belonging to *Ceratitis,* and particularly preferably *Ceratitis capitata.*

Usable insects are insects at any growth stage. Examples of insects include eggs, larvae, prepupae, pupae, and adult insects. These can be used entirely or partially.

Specific examples of insect materials include insect extracts, insect homogenates, and the like. The insect material may be one containing an insect body fluid and/or extraction solvent (a wet material), or one obtained by removing the insect body fluid and/or extraction solvent (a dry material). Regarding the properties thereof, the wet material is, for example, in the form of a liquid, a paste, or the like; and the dry material is, for example, in the form of a powder, particles, amorphous particles, or the like. Specific examples of forms of the insect material include concentrated solids, fat solids, reduced-fat solids, and the like.

Such insect materials can be used singly, or in a combination of two or more.

The insect material has a calcium content of 800 to 3500 mg/100 g. In some embodiments, the calcium content is, for example, 900 to 1500 mg/100 g, 800 to 2000 mg/100 g, 1800 to 2800 mg/100 g, 1000 to 2200 mg/100 g, 1100 to 1900 mg/100 g, 1800 to 2400 mg/100 g, 2000 to 3100 mg/100 g, 2200 to 2900 mg/100 g, 1300 to 2100 mg/100 g, 1900 to 2700 mg/100 g, or 2500 to 2850 mg/100 g. In some embodiments, the calcium content is, for example, within a range in which the lower limit is any one of the following values, or the upper limit and the lower limit are any two of the following values: 800 mg/100 g, 900 mg/100 g, 1000 mg/100 g, 1250 mg/100 g, 1500 mg/100 g, 1750 mg/100 g, 2000 mg/100 g, 2200 mg/100 g, 2400 mg/100 g, 2600 mg/100 g, 2800 mg/100 g, 3000 mg/100 g, and 3500 mg/100 g.

The insect material has a magnesium content of 230 to 900 mg/100 g. In some embodiments, the magnesium content is, for example, 230 to 500 mg/100 g, 300 to 900 mg/100 g, 250 to 800 mg/100 g, 280 to 750 mg/100 g, 350 to 700 mg/100 g, 380 to 650 mg/100 g, 400 to 850 mg/100 g, 420 to 900 mg/100 g, 480 to 880 mg/100 g, 500 to 700 mg/100 g, 550 to 850 mg/100 g, 700 to 830 mg/100 g, or 750 to 1000 mg/100 g. In some embodiments, the magnesium content is, for example, within a range in which the lower limit is any one of the following values, or the upper limit and the lower limit are any two of the following values: 230 mg/100 g, 250 mg/100 g, 300 mg/100 g, 350 mg/100 g, 400 mg/100 g, 450 mg/100 g, 500 mg/100 g, 550 mg/100 g, 600 mg/100 g, 650 mg/100 g, 700 mg/100 g, 750 mg/100 g, 800 mg/100 g, 850 mg/100 g, 880 mg/100 g, 900 mg/100 g, and 1000 mg/100 g.

The insect material preferably contains a protein. For example, the insect material has a protein content of 40 to 80 mass%. In some embodiments, the protein content is 40 to 50 mass%, 40 to 60 mass%, 40 to 70 mass%, 45 to 60 mass%, 45 to 65 mass%, 50 to 65 mass%, 50 to 85 mass%, 55 to 75 mass%, 60 to 75 mass%, or 65 to 80 mass%. In some embodiments, the protein content is, for example, in a range wherein the lower limit is any one of the following values, or the upper limit and the lower limit are any two of the following values: 40 mass%, 45 mass%, 50%, 55 mass%, 60 mass%, 65 mass%, 70 mass%, and 80 mass%.

The insect material preferably contains cholesterol. In some embodiments, the cholesterol content of the insect material is, for example, 0.001 mg/100 g or less, 0.01 mg/100 g or less, 0.05 mg/100 g or less, 0.1 mg/100 g or less, 0.15 mg/100 g or less, 0.2 mg/100 g or less, 0.25 mg/100 g or less, 0.3 mg/100 g or less, or 0.5 mg/100 g or less. In some embodiments, the cholesterol content of the insect material is, for example, 0.001 to 0.01 mg/100 g, 0.001 to 0.05 mg/100 g, 0.01 to 0.075 mg/100 g, 0.05 to 0.1 mg/100 g, 0.15 to 0.2 mg/100 g, 0.2 to 0.25 mg/100 g, or 0.25 to 0.3 mg/100 g.

The insect material preferably contains at least one member selected from the group consisting of iron, phosphorus, potassium, sodium, and zinc.

In some embodiments, the iron content of the insect material is, for example, 10 to 15 mg/100 g, 15 to 25 mg/100 g, 20 to 30 mg/100 g, 20 to 35 mg/100 g, 15 to 35 mg/100 g, or 30 to 40 mg/100 g. In some embodiments, the iron content is, for example, within a range in which the lower limit is any one of the following values, or the upper limit and lower limit are any two of the following values: 10 mg/100 g, 12 mg/100 g, 15 mg/100 g, 17 mg/100 g, 17 mg/100 g, 20 mg/100 g, 25 mg/100 g, 30 mg/100 g, 35 mg/100 g, and 40 mg/100 g.

In some embodiments, the phosphorus content of the insect material is, for example, 750 to 1500 mg/100 g, 1000 to 2500 mg/100 g, 2000 to 3000 mg/100 g, 2500 to 3250 mg/100 g, 1000 to 2800 mg/100 g, or 2750 to 3250 mg/100 g. In some embodiments, the phosphorus content is, for example, within a range in which the lower limit is any one of the following values, or the upper limit and the lower limit are any two of the following values: 800 mg/100 g, 1000 mg/100 g, 1250 mg/100 g, 1700 mg/100 g, 2000 mg/100 g, 2500 mg/100 g, 2750 mg/100 g, and 3000 mg/100 g.

In some embodiments, the potassium content of the insect material is, for example, 500 to 750 mg/100 g, 600 to 850 mg/100 g, 900 to 1200 mg/100 g, 1000 to 1150 mg/100 g, 1050 to 1200 mg/100 g, 500 to 1300 mg/100 g, or 1200 to 1500 mg/100 g. In some embodiments, the potassium content is, for example, within a range in which the lower limit is any one of the following values, or the upper limit and the lower limit are any two of the following values: 450 mg/100 g, 500 mg/100 g, 600 mg/100 g, 700 mg/100 g, 800 mg/100 g, 900 mg/100 g, 1000 mg/100 g, 1100 mg/100 g, 1200 mg/100 g, 1300 mg/100 g, and 1400 mg/100 g.

In some embodiments, the sodium content of the insect material is, for example, 1 to 100 mg/100 g, 10 to 150 mg/100 g, 30 to 200 mg/100 g, 20 to 170 mg/100 g, 45 to 190 mg/100 g, 65 to 210 mg/100 g, 100 to 195 mg/100 g, 55 to 125 mg/100 g, 130 to 210 mg/100 g, 90 to 165 mg/100 g, 100 to 220 mg/100 g, 80 to 140 mg/100 g, 1 to 200 mg/100 g, or 1 to 250 mg/100 g. In some embodiments, the sodium content is, for example, within a range in which the lower limit is any one of the following values, or the upper limit and the lower limit are any two of the following values: 60 mg/100 g, 70 mg/100 g, 80 mg/100 g, 80 mg/100 g, 90 mg/100 g, 100 mg/100 g, 110 mg/100 g, 120 mg/100 g, 130 mg/100 g, 140 mg/100 g, 150 mg/100 g, 160 mg/100 g, 170 mg/100 g, 180 mg/100 g, 190 mg/100 g, 200 mg/100 g, 225 mg/100 g, and 250 mg/100 g.

In some embodiments, the zinc content of the insect material is, for example, 10 to 25 mg/100 g, 15 to 45 mg/100 g, 10 to 50 mg/100 g, 20 to 45 mg/100 g, 25 to 55 mg/100 g, or 30 to 55 mg/100 g. In some embodiments, the zinc content is, for example, in a range in which the lower limit is any one of the following values, or the upper limit and the lower limit are any two of the following values: 10 mg/100 g, 15 mg/100 g, 20 mg/100 g, 25 mg/100 g, 25 mg/100 g, 30 mg/100 g, 35 mg/100 g, 40 mg/100 g, 45 mg/100 g, 50 mg/100 g, and 60 mg/100 g.

The insect material preferably contains a fatty acid. The fatty acid preferably contains at least one member selected from the group consisting of monounsaturated fatty acids and polyunsaturated fatty acids. The number of kinds of fatty acids is, for example, in the range of 2 to 5, 3 to 8, 4 to 12, 3 to 15, 7 to 14, 8 to 13, or 6 to 15. The number of kinds of fatty acids is, for example, within a range in which the lower limit is any one of the following values, or the upper limit and the lower limit and the upper limit are any two of the following values: 2, 3, 4, 5, 6, 7, 8, 9, 10, 11, 12, 13, 14, and 15.

Examples of monounsaturated fatty acids include, but are not limited to, palmitoleic acid, oleic acid, cis-11-octadecanoic acid, myristoleic acid, and the like. Preferable examples include palmitoleic acid and the like.

In some embodiments, the insect material contains fatty acids whose monounsaturated fatty acid content is, for example, 25 to 70 mass%, 25 to 60 mass%, 35 to 65 mass%, 40 to 60 mass%, or 45 to 55 mass%.

In some embodiments, the insect material contains fatty acids whose palmitoleic acid content is, for example, 15 to 35 mass%, 15 to 30 mass%, 15 to 25 mass%, 20 to 35 mass%, or 20 to 30 mass%.

Examples of polyunsaturated fatty acids include, but are not limited to, linoleic acid, linolenic acid, and the like.

In some embodiments, the insect material contains fatty acids whose polyunsaturated fatty acid content is, for example, 0.05 to 10 mass%, 0.1 to 10 mass%, 0.5 to 12 mass%, 0.5 to 10 mass%, 1 to 10 mass%, 1 to 8 mass%, or 1 to 6 mass%.

Methods for producing insect powder or product are common, and would be apparent to one of ordinary skill in the art. An example of such a method for making insect products includes wet-grinding of at least one whole insect, at least one whole adult insect, or at least one whole live insect into an insect slurry; and drying the insect slurry to form a dried insect product comprising solid insect matter particles. The drying may include spray drying or drum drying. As used herein, "insect slurry" is a semiliquid mixture of ground non-dewatered insects with or without added liquid. The semiliquid mixture includes a pre-determined ratio of insects (mass) to added liquid (mass), such as water. For example, an insect slurry includes a 1:2 weight ratio of insects to water (e.g., 200 pounds (approx. 90.7 kg) of insects and 400 pounds (approx. 181.4 kg) of water). The step of drying may include heat drying, spray drying, freeze drying, tray drying, paddle drying, fluid bed drying, flash drying, air drying, vacuum drying, drum drying, or a combination thereof. Dryers, such as ovens, impingement ovens, freeze dryers, heat dryers, or hot air or vacuum dryers may be used. Spray drying is used to dry the insect slurry into a dried insect product. Drum drying is used to dry the insect slurry into a dried insect product. As used herein, "dried insect product" refers to an insect product (e.g., powder, flakes, meal) comprising water in an amount of about 15% by weight or less of the dried insect product. For example, the dried insect product comprises water in an amount of less than about 10% by weight.

Methods for obtaining whole insect or reduced-fat insect powder would be apparent to one of ordinary skill in the art. These methods can include non-limiting steps, such as blanching, wet milling, oil separation, and drying to obtain reduced-fat insect powder; or blanching, drying, and milling to obtain whole insect powder.

The advantages of wet-stage grinding include, for example:
(1) reducing the heat needed to preserve and dry the insect slurry;
(2) minimizing/avoiding the negative effects heat has on the insect product properties;
(3) increasing process efficiency;
(4) improving product digestibility; and
(5) improving process throughputs.

The wet-grinding process may be performed using any one of, or a combination of, the following devices: grinders, mills, stone mills, mixers, peanut grinders, peanut butter grinders, colloid mills, pin mills, bead mills, dispersers, homogenizers, choppers, rotor stator devices, hammer mills, press grinders, mashers, macerators, food processors, rollers, or juicers. Examples of grinders include, but are not limited to, Olde Tyme Peanut Mill, Olde Tyme Peanut Grinder, Olde Tyme Peanut Butter Grinder, Olde Tyme Peanut Butter Mill, Old Style Peanut Mill, Olde Style Peanut Grinder, Olde Style Peanut Butter Grinder, Olde Style Peanut Butter Mill, IKA Mixer, IKA Colloid Mill, Jack LaLanne Power Juicer, or an Acme 6001 Centrifugal Juicer.

The content of the insect material in the feed for aquatic animals of the present invention is not particularly limited. For example, the content of the insect material is in the range of 0.1 to 50 mass%, preferably 0.2 to 50 mass%, more preferably 0.5 to 50 mass%, and even more preferably 0.8 to 25 mass%. In some embodiments, the content of the insect material is, for example, 20 to 30 mass%, 0.5 to 3 mass%, or 5 to 15 mass%. In some embodiments, the content of the insect material is, for example, within a range in which the lower limit is any one of the following values, or the upper limit and the lower limit are any two of the following values limits: 0.1 mass%, 0.2 mass%, 0.5 mass%, 0.8 mass%, 1 mass%, 2 mass%, 5 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The fish meal is not particularly limited, and fish meal obtained from various kinds of raw material fish can be used. Examples of raw material fish include sardine, Alaska pollack (*Theragra chalcogramma*)*,* saury, herring, catfish, bluegill, black bass, silver carp (*Hypophthalmichthys molitrix*), and the like. The fish meal can be obtained, for example, by heat-treating the raw material, and then drying and crushing the material. Such fish meal can be used singly, or in a combination of two or more.

When the feed of the present disclosure contains fish meal, the content of the fish meal in the feed of the present disclosure is not particularly limited. For example, the content of the fish meal is in the range of 0.1 to 50 mass%, preferably 0.2 to 50 mass%, more preferably 0.5 to 50 mass%, and even more preferably 0.8 to 25 mass%. In some embodiments, the content of the fish meal is, for example, within a range in which the lower limit is any one of the following values, or the upper limit and the lower limit are any two of the following values: 0.1 mass%, 0.2 mass%, 0.5 mass%, 0.8 mass%, 1 mass%, 2 mass%, 5 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The fish meal alternative is not particularly limited. For example, protein-containing raw materials obtained from organisms other than fish (plants or animals) can be used. Specific examples of fish meal alternatives include plant feed ingredients such as soybean meal, soy protein concentrate, corn gluten meal, distiller's dried grains with solubles, and rapeseed oil meal; animal feed ingredients such as meat meal, meat bone meal, feather meal, and blood meal; microalgae ingredients; and single-cell organism raw materials such as yeast and bacteria. Such fish meal alternatives can be used singly, or in a combination of two or more.

When the feed of the present disclosure contains a fish meal alternative, the content of the fish meal alternative in the feed of the present disclosure is not particularly limited. For example, the content of the fish meal is in the range of 0.1 to 50 mass%, preferably 0.2 to 50 mass%, more preferably 0.5 to 50 mass%, and even more preferably 0.8 to 25 mass%. In some embodiments, the content of the fish meal is, for example, within a range in which the lower limit is any one of the following values, or the upper limit and the lower limit are any two of the following values: 0.1 mass%, 0.2 mass%, 0.5 mass%, 0.8 mass%, 1 mass%, 2 mass%, 5 mass%, 8 mass%, 10 mass%, 12 mass%, 15 mass%, 18 mass%, 20 mass%, 22 mass%, 25 mass%, 28 mass%, 30 mass%, 32 mass%, 35 mass%, 40 mass%, and 50 mass%.

The feed of the present disclosure may contain other ingredients, in addition to the above ingredients, if necessary. Examples of such other ingredients include binders (e.g., sodium carboxymethylcellulose (CMC), guar gum, sodium alginate, sodium polyacrylate, casein sodium, propylene glycol, etc.), cereal powders (e.g., wheat flour, starch, etc.), minerals, vitamins (e.g., vitamin C, vitamin B1, vitamin A, vitamin D, vitamin E, etc.), amino acids (e.g., lysine, methionine, histidine, etc.), pigments (e.g., β-carotene, astaxanthin, canthaxanthin, etc.), liver oils (e.g., cod liver oil, etc.), and the like.

When the feed of the present disclosure contains other ingredients, the content of other ingredients in the feed of the present disclosure is not particularly limited. For example, the content of other ingredients is 0.01 to 30 mass%.

The form of the feed of the present disclosure is not particularly limited, as long as it can be ingested by the target aquatic animal. That is, the feed of the present disclosure may be in any form such as a powder, granules, crumbles, pellets, cubes, a paste, or a liquid. For example, the feed of the present disclosure may be formed into pellets, such as dry pellets or moist pellets. The form of the feed of the present disclosure can be appropriately selected according to various conditions, such as the type and growth stage of the target aquatic animal. For example, for fry, the feed in the form of a powder or crumbles can be usually preferably used. For adult fish, dry pellets can be usually preferably used.

The target aquatic animal of the feed of the present disclosure is not particularly limited, as long as the animal can live in water. Examples of aquatic animals include fish, crustaceans, shellfish, and the like. Among these, fish are preferable. Specific examples of fish include red seabream (*Pagrus major*), carp, trout, yellowtail (*Seriola quinqueradiata*), young yellowtail, greater yellowtail (*Seriola dumerili*)*,* yellowtail amberjack (*Seriola lalandi*)*,* tuna, puffer fish, bastard halibut (*Paralichthys .olivaceus*)*,* horse mackerel, mackerel, grouper, *Epinephelus bruneus,* salmon, eel, catfish (*Silurus asotus*), *Plecoglossus altivelis altivelis,* char (*Salvelinus pluvius*), eel, carp, sea bass, crucian carp, trout, *Oncorhynchus masou,* lake smelt (*Hypomesus nipponensis*), goldfish, killifish (*Oryzias latipes*), tilapia (*Oreochromis niloticus*), sturgeon, zebrafish (*Danio rerio*), and the like. Examples of crustaceans include shrimps (prawns) and crabs. Specific examples of crustaceans include vannamei shrimp (*Litopenaeus vannamei*), Japanese tiger prawn (*Marsupenaeus japonicus*), black tiger prawn (*Penaeus monodon*), white leg shrimp (*Litopenaeus vannamei*), and swimming crab (*Portunus trituberculatus*).

### 3. Method for Producing Aquatic Animal

The present disclosure provides as one embodiment a method for producing an aquatic animal (specifically, for example, an aquatic animal product), the method comprising feeding an aquatic animal the feed of the present disclosure (also referred to herein as "the production method of the present disclosure"). This is explained below.

The feeding amount of the feed of the present disclosure is not particularly limited. The feeding amount of the feed of the present disclosure can be appropriately selected according to various conditions, such as the type of the target aquatic animal. The feeding amount of the feed of the present disclosure can be, for example, the amount of satiation. The feed of the present disclosure can be fed once a day, or two or more times a day in divided portions. Alternatively, the feed of the present disclosure can be fed once every several days. The feeding amount of the feed of the present disclosure at the time of each feeding may or may not be constant.

The period of feeding of the feed of the present disclosure is not particularly limited; and can be appropriately selected according to various conditions, such as the type of the target aquatic animal. The feed of the present disclosure can be continuously fed over the entire period of cultivation (breeding), or may be fed only in a partial period of cultivation (breeding). The term "partial period" may refer to, for example, a period consisting of 10% or more, 20% or more, 30% or more, 50% or more, 70% or more, or 90% or more of the entire period of cultivation (breeding). The period of feeding of the feed of the present invention can be, for example, 3 days or longer, 1 week or longer, 2 weeks or longer, 3 weeks or longer, 4 weeks or longer, 2 months or longer, or 3 months or longer; can be 1 year or shorter, 6 months or shorter, 4 months or shorter, 3 months or shorter, 2 months or shorter, 4 weeks or shorter, or 3 weeks or shorter; or can be within a range defined by any consistent combination of these ranges. The feeding of the feed of the present invention may be continued and interrupted repeatedly for arbitrary periods, and with arbitrary intervals.

Cultivation (breeding) of the aquatic animal can be performed in the same manner as usual methods for cultivating (breeding) an aquatic animal, except that the feed of the present disclosure is fed. Cultivation (breeding) can be performed, for example, in a fish pen in the sea, or a fish tank on land. The term "cultivation" includes both propagation cultivation, in which only seed organisms are produced (fry production etc.); and cultivation in which fish are raised to produce adult organisms (parent fish etc.).

### 4. Aquatic Animal Growth Promoter

The present disclosure provides as one embodiment an aquatic animal growth promoter containing an insect material having a calcium content of 800 to 3500 mg/100 g, and/or a magnesium content of 230 to 1000 mg/100 g (also referred to herein as "the agent 1 of the present disclosure"). This is explained below.

The insect materials and aquatic animals are the same as above.

The agent 1 of the present disclosure can be used unmodified to feed aquatic animals, or can be used as an additive to a feed for aquatic animals.

The agent 1 of the present disclosure can promote the growth of aquatic animals or their body-weight gain.

### 5. Fish Visceral Weight Ratio Reducing Agent

The present disclosure provides as one embodiment a fish visceral weight ratio reducing agent containing an insect material having a calcium content of 800 to 3500 mg/100 g, and/or a magnesium content of 230 to 1000 mg/100 g (also referred to herein as "the agent 2 of the present disclosure"). This is explained below.

The insect materials and aquatic animals are the same as above.

The agent 2 of the present disclosure can be used unmodified to feed aquatic animals, or can be used as an additive to a feed for aquatic animals.

The agent 2 of the present disclosure can reduce the visceral weight ratio of fish.

### Examples

The present invention is explained in detail with reference to Examples; however, the present invention is not limited to these Examples.

### Production Example 1: Production of Insect Material

Insect materials (reduced-fat protein powder and whole larvae powder) were produced using *Ceratitis capitata* larvae as raw materials. Specifically, the reduced-fat protein powder was obtained as follows: Larvae were washed, blanched at 92°C for 6 minutes, and then crushed with a stone mill; the obtained composition was centrifuged; and a precipitate was collected, dried, and crushed. The whole larvae powder was specifically obtained by washing, and blanching larvae at 92°C for 6 minutes, and then performing drying and crushing. The analyzed results of compositions etc. of the obtained insect materials are shown in Tables 1 to 3.

**Table 1**

| **Component** | **Reduced fat protein powder (non-soluble)** | **Whole larvae powder** |
|---|---|---|
| **Nutritional Panel** | | |
| Dry matter (%) | 94.45-97.6 | 95.47-97.3 |
| Moisture (%) | 2.44-5.55 | 2.96-4.53 |
| Crude Protein (%) | 60.51-71 | 42.64-48.3 |
| Carbohydrates (%) | 4.37-16.87 | 11.8-32.5 |
| Chitin (%) | 6.59-7.04 | 3.79 |
| Trehalose (%) | 0.7-0.8 | 2.2 |
| Ash (Minerals) (%) | 5.21-13.0 | 4.45-6.59 |
| Fat (%) | 7.95-12.3 | 18.75-34.33 |
| Saturated fat (%) | 3.45-4.51 | 13.2 |
| Mono-unsaturated fat (%) | 4.06-6.94 | 16.2 |
| Poly-unsaturated fat (%) | 0.31-0.9 | 0.44 |
| Cholesterol (mg/100 g) | 0-0,237 | <0.2 |
| Energy (kcal/100g) | 319-456 | 470-527 |

| **Minerals (mg/100 g)** | | |
|---|---|---|
| Calcium | 1,120-3,090 | 842 |
| Iron | 24.6-32 | 18.9 |
| Magnesium | 236-846 | 265 |
| Phosphorus | 1,150-2,540 | 1,100 |
| Potassium | 510-558 | 1,270 |
| Sodium | 75-96.9 | 166 |
| Zinc | 15-38.4 | 25.1 |

**Table 2**

| **Component** | **Reduced fat protein powder (non-soluble)** | **Whole larvae powder** |
|---|---|---|
| **Amino Acids (g/100 g)** | | |
| Aspartic Acid | 5.91-6.36 | 5.04 |
| Serine | 3.13-3.73 | 2.48 |
| Glutamic acid | 7.57-8.62 | 7.48 |
| Glycine | 2.46-2.9 | 2.64 |
| Histidine | 1.39-1.59 | 1.48 |
| Arginine | 3.45-3.82 | 3.32 |
| Threonine | 2.66-3.03 | 2.8 |
| Alanine | 3.65-4.11 | 3.6 |
| Proline | 2.77-3.12 | 2.04 |
| Cystine | 0.50-0.59 | 0.4 |
| Tyrosine | 3.66-3.92 | 3.28 |
| Valine | 3.2-3.91 | 2.76 |
| Methionine | 1.29-1.35 | 1.56 |
| Lysine | 4.47-5.23 | 3.88 |
| Isoleucine | 2.75-3.23 | 1.84 |
| Leucine | 4.28-4.7 | 3.2 |
| Phenylalanine | 2.66-2.92 | 2.04 |
| Tryptophan | 0.80 | |

**Table 3**

| **Component** | **Reduced fat protein powder (non-soluble)** | **Whole larvae powder** |
|---|---|---|
| **Fatty Acids (%)** | | |
| Butyric acid (C4:0) | 0.18-0.24 | 0.49 |
| Caproic acid (C6:0) | 0 | 0 |
| Capric acid (C10:0) | 0.14-0.19 | 0.22 |
| Lauric acid (C12:0) | 0.93-0.98 | 1.41 |
| Myristic acid (C14:0) | 2.36-2.43 | 2.98 |
| Myristoleic acid (C14:1) | 0.34-0.38 | 0.45 |
| Palmitic acid (C16:0) | 29.5-31.7 | 34.1 |
| Palmitoleic acid (C16:1) | 23.1-27.1 | 26.9 |
| Stearic acid (C18:0) | 3.01-3.48 | 2.77 |
| Oleic acid (C18:1n9c) | 22.5-28.2 | 24.1 |
| Cis-11-Octadecanoic acid (C18:1n11c) | 0.32-0.65 | 0.54 |
| Linoleic acid (C18:2n6c) | 1.83-9.46 | 1.07 |
| Linolenic acid (C18:3n3c | 0-0.68 | 0.35 |
| Arachidic acid (C20:0) | 0.23-0.26 | 0.17 |
| Heneicosanoic acid (C-21:0) | 0 | 0 |

| **Physical Properties** | | |
|---|---|---|
| Color and appearance | Beige powder | Tan powder |
| Density (kg/L) | 0.53 | |

### Example 1: Feeding Test 1 for Red Seabream

As test diets, a fish meal diet (FM) containing fish meal as the main protein source and a diet (FFM) in which 50% of the fish meal contained in a fish meal diet was replaced with a reduced-fat protein powder (fruit fly powder: Production Example 1) were produced in the form of pellets (diameter: 3.2 mm, length: 3 to 5 mm). The compositions of the FM and FFM are shown in Table 4. In Table 4, the numerical values are in parts by mass.

**Table 4**

| | FM | FFM |
|---|---|---|
| Fish meal | 500 | 250 |
| Fruit fly powder | 0 | 250 |
| Soybean meal | 200 | 200 |
| Corn gluten meal | 100 | 100 |
| Flour | 70 | 67 |
| Vitamin mix | 20 | 20 |
| Mineral mix | 20 | 20 |
| Guar gum | 5 | 5 |
| CMC | 20 | 20 |
| Cod liver oil | 65 | 68 |
| | 1000 | 1000 |

Ten red seabreams with an average fish weight of 38 g were housed in each 1.1-ton tank. Two tanks were provided for each of the FM test group and the FFM test group, for a total of four tanks. Each test diet was fed once a day for 7 days a week until satiation. After one-week feeding, the average fish weight, daily growth efficiency (100 x (ln final mean weight - ln initial mean weight)/trial days), diet efficiency (100 x (final total body weight - initial total body weight)/total dry feed intake), and survival rate (100 x (final fish number/initial fish number)) were measured. The results are shown in Table 5.

**Table 5**

| | FM | FFM |
|---|---|---|
| Initial average fish weight (g) | 37.9 | 38.0 |
| Final average fish weight (g) | 41.1 | 42.1 |
| Daily growth percentage (%/day) | 1.03 | 1.27 |
| Diet efficiency (%) | 65.4 | 71.6 |
| Survival rate (%) | 100 | 100 |

When compared to those of the FM test group, the FFM test group had the same survival rate, and a higher final average fish weight, daily growth percentage, and diet efficiency.

### Example 2: Feeding Test for Carp

As test diets, a commercially available diet (Feed One Co., Ltd., Crumbles for carp 2C) and a fruit fly diet obtained by adding a reduced-fat protein powder (fruit fly powder: Production Example 1) in an amount of 1 mass% to the commercially available diet were prepared. The fruit fly diet was obtained by adding a fruit fly powder to the above-mentioned commercially available diet, mixing and kneading them by adding water, and performing drying, crushing, and sieving with a 1-mm-diameter sieve. Twelve carp (*Cyprinus carpio*) with an average fish weight of 0.43 g were housed in each 20-L tank. One tank was provided for each of the control group (commercially available diet) and the fruit fly 1% group (fruit fly diet), for a total of two tanks. The feeding temperature was 22±1°C. Each test diet was fed once a day in an amount of 4% of the fish weight. After 28 days of feeding, the average fish weight and the survival rate were measured. The results are shown in Table 6.

**Table 6**

| | Control group | Fruit fly 1% group |
|---|---|---|
| Initial average fish weight (g) | 0.43 | |
| Final average fish weight (g) | 1.04 | 1.14 |
| Survival rate (%) | 100 | 100 |

When compared to those of the control group, the fruit fly 1% group had the same survival rate, and a higher final average fish weight.

### Example 3: Feeding Test for Rainbow Trout

As test diets, a commercially available diet (Feed One Co., Ltd., mixed diet for trout fry (No. 3 CXD)) and a fruit fly diet obtained by adding a reduced-fat protein powder (fruit fly powder: Production Example 1) in an amount of 10 mass% to the commercially available diet were prepared. The fruit fly diet was obtained by adding a fruit fly powder to the above-mentioned commercially available diet, mixing and kneading them by adding water, and performing drying, mashing, and sieving with a 1-mm-diameter sieve.

Ten rainbow trout (*Oncorhynchus mykiss*) having an average fish weight of 4.91 were housed in each 50-L tank, one tank was provided for each of the control group (commercially available diet) and the fruit fly 10% group (fruit fly diet), for a total of two tanks. The feeding temperature was 15±1°C. Each test diet was fed once a day in an amount of 4% of the fish weight. After 28 days of feeding, the average fish weight and the survival rate were measured. The results are shown in Table 7.

**Table 7**

| | Control group | Fruit fly 10% group |
|---|---|---|
| Initial average fish weight (g) | 4.91 | |
| Final average fish weight (g) | 8.49 | 10.42 |
| Survival rate (%) | 100 | 100 |

When compared to the control group, the 10% fruit fly group had the same survival rate, and a higher final average fish weight.

### Example 4: Feeding Test 2 for Red Seabream

As test diets, a fish meal diet (FM2) containing fish meal as the main protein source and a diet (FFM2) containing 25.0% of reduced-fat protein powder (fruit fly powder: Production Example 1) were produced in the form of pellets (diameter: 3.2 mm, length: 3 to 5 mm). Further, as a test diet, a feed (CM) containing 24.5% of commercially available cricket meal (calcium content: 207 mg/100 g, magnesium content: 81 mg/100 g) was produced in the form of pellets (diameter: 3.2 mm, length: 3 to 5 mm). The compositions of the FM2, FFM2, and CM are shown in Table 8. In Table 8, the numerical values are in parts by mass.

**Table 8**

| | FM2 | FFM2 | CM |
|---|---|---|---|
| Fish meal | 500 | 250 | 250 |
| Fruit fly powder | 0 | 250 | 0 |
| Cricket meal | 0 | 0 | 245 |
| Soybean meal | 170 | 170 | 170 |
| Corn gluten meal | 100 | 100 | 100 |
| Wheat flour | 72 | 58 | 65 |
| Taurine | 0 | 5 | 5 |
| Calcium phosphate | 10 | 10 | 10 |
| Vitamin mix | 30 | 30 | 30 |
| Mineral mix | 30 | 30 | 30 |
| Guar gum | 5 | 5 | 5 |
| CMC | 20 | 20 | 20 |
| Cod liver oil | 63 | 72 | 70 |
| Total | 1000 | 1000 | 1000 |

Fifteen red seabreams with an average fish weight of 17.7 g were housed in each 1.1-ton tank. Two tanks were provided for each of the FM2 test group, FFM2 test group, and CM test group, for a total of six tanks. Each test diet was fed once a day until satiation. After nine-week feeding, the average fish weight, diet efficiency (100 x (final total body weight - initial total body weight)/total dry feed intake), and survival rate (100 x (final fish number/initial fish number)) were measured. The results are shown in Table 9.

**Table 9**

| | FM2 | FFM2 | CM |
|---|---|---|---|
| Initial average fish weight (g) | 17.6 | 17.7 | 17.7 |
| Final average fish weight (g) | 55.3 | 56.6 | 52.3 |
| Diet efficiency (%) | 98.1 | 103.1 | 95.2 |
| Survival rate (%) | 100 | 100 | 100 |

Further, three fish were randomly selected from each tank, the fish were subjected to laparotomy, the viscera were taken out, their weights were measured, the visceral weight relative to the fish weight (i.e., visceral weight ratio) was calculated, and the maximum and minimum visceral weight ratios were removed. Data of four samples from each test group were obtained and organized. The results are shown in Table 10.

**Table 10**

| | | Fish weight (g) | Visceral weight (g) | Visceral weight ratio (%) |
|---|---|---|---|---|
| FM | No1 | 55.3 | 6.35 | 11.5 |
| | No2 | 60.2 | 7.49 | 12.5 |
| | No3 | 54.0 | 6.54 | 12.1 |
| | No4 | 55.9 | 6.44 | 11.5 |
| | Average | 56.3 | 6.71 | 11.9 |
| FFM2 | No1 | 60.0 | 6.46 | 10.8 |
| | No2 | 65.4 | 5.86 | 9.0 |
| | No3 | 58.4 | 5.67 | 9.7 |
| | No4 | 56.0 | 5.16 | 9.2 |
| | Average | 59.9 | 5.78 | 9.7 |
| CM | No1 | 44.9 | 4.56 | 10.2 |
| | No2 | 56.7 | 5.81 | 10.2 |
| | No3 | 48.0 | 4.91 | 10.2 |
| | No4 | 56.2 | 5.79 | 10.3 |
| | Average | 51.5 | 5.27 | 10.2 |

When compared to those of the FM2 and CM test groups, the FFM2 test group had the same survival rate, a higher final average fish weight and diet efficiency, and the lowest visceral weight ratio.

## Claims

1. A feed for aquatic animals, comprising:
(A) an insect material having a calcium content of 800 to 3500 mg/100 g, and/or a magnesium content of 230 to 1000 mg/100 g; and
(B) fish meal and/or a fish-meal-alternative material.

2. The feed for aquatic animals according to claim 1, wherein the insect material has a protein content of 40 to 80 mass%.

3. The feed for aquatic animals according to claim 1 or 2, wherein the insect material has a cholesterol content of 0.25 mg/100 g or less.

4. The feed for aquatic animals according to any one of claims 1 to 3, wherein the insect material comprises at least one member selected from the group consisting of iron, phosphorus, potassium, sodium, and zinc.

5. The feed for aquatic animals according to claim 4, wherein the insect material satisfies at least one requirement selected from the group consisting of an iron content of 15 to 35 mg/100 g, a phosphorus content of 1000 to 2800 mg/100 g, a potassium content of 500 to 1300 mg/100 g, a sodium content of 1 to 200 mg/100 g, and a zinc content of 10 to 50 mg/100 g.

6. The feed for aquatic animals according to any one of claims 1 to 5, wherein the insect material comprises at least one fatty acid selected from the group consisting of monounsaturated fatty acids and polyunsaturated fatty acids.

7. The feed for aquatic animals according to claim 6, wherein the insect material satisfies at least one requirement selected from the group consisting of a monounsaturated fatty acid content in the fatty acid of 25 to 60 mass%, and a polyunsaturated fatty acid content in the fatty acid of 0.1 to 10 mass%.

8. The feed for aquatic animals according to any one of claims 1 to 7, wherein the insect material is at least one member selected from the group consisting of insect extracts and insect homogenates.

9. The feed for aquatic animals according to any one of claims 1 to 8, wherein the insect material is a material derived from at least one member selected from the group consisting of eggs, larvae, prepupae, pupae, and adult insects.

10. The feed for aquatic animals according to any one of claims 1 to 9, wherein the insect material is a material derived from an insect belonging to Diptera.

11. The feed for aquatic animals according to any one of claims 1 to 10, wherein the insect material is a material derived from at least one member selected from the group consisting of insects belonging to Tephritidae, insects belonging to Stratiomyidae, and insects belonging to Muscidae.

12. The feed for aquatic animals according to any one of claims 1 to 11, wherein the content of the insect material in the feed for aquatic animals is 0.5 to 50 mass%.

13. The feed for aquatic animals according to any one of claims 1 to 12, which is for fish.

14. A method for producing an aquatic animal, comprising feeding the aquatic animal the feed for aquatic animals according to any one of claims 1 to 13.

15. An aquatic animal growth promoter comprising an insect material having a calcium content of 800 to 3500 mg/100 g, and/or a magnesium content of 230 to 1000 mg/100 g.

16. An agent for reducing the visceral weight ratio of an aquatic animal, comprising an insect material having a calcium content of 800 to 3500 mg/100 g, and/or a magnesium content of 230 to 1000 mg/100 g.
